# EUROPEAN PATENT APPLICATION

(11) **EP 2 456 003 A1**
(43) Date of publication of application: **23.05.2012**
(21) Application number: 10192088.2
(22) Date of filing: 22.11.2010
(51) Int. Cl.: H01M 10/50, B60H 1/00

(54) **Battery Pack**

(71) Applicant: SAAB AUTOMOBILE AB, 461 80 Trollhättan (SE)
(72) Inventor: Zimmer, Claes, 461 55, TROLLHÄTTAN (SE)
(74) Representative: Edlund, Fabian

(57) **Abstract**

A battery pack for a vehicle is disclosed, comprising a battery assembly comprising at least one battery cell, a housing enclosing the battery assembly, wherein the housing comprising at least one baffle having openings for directing an air flow around the battery assembly, and a foil of a material with an electrical resistivity having a positive temperature coefficient (PTC) characteristic, wherein the foil having openings. The foil is arranged on at least a portion of the at least one baffle such that openings of the foil and openings of the portion are superposed, and the foil is connectable to a power source, thereby enabling temperature control of the battery pack.

## Description

### Field of the invention

The present invention relates to a battery pack having means for heating and cooling.

### Background

Electrical motor system in vehicles will play an important role in the future as an alternative to today's petroleum based motor systems. One important component in the electrical motor system is the battery system.

The capacity of a battery is dependent on the temperature as too high or too low temperatures may impair the performance of the battery. For optimal performance and life time of a battery the temperature of the battery pack must be kept within an optimal working temperature range, which may vary among different battery types. It is therefore important to be able to control the temperature of the battery pack of the vehicle, both during driving as well as when the vehicle is stationary and not in use.

Heat is typically produced during discharging or recharging of the battery, thus there is generally not a need for heating the battery pack when in use, but rather there is a need for cooling the battery pack such that the temperature can be kept within a desirable temperature range. In contrast, when a battery pack in a vehicle, has been left unused at low temperatures there is need to quickly warm the battery pack to within the optimal temperature range. In a hybrid vehicle this is typically achieved by starting and initially driving the motor using, for example, petroleum fuel and thus heating the battery pack until an optimal working temperature is reached.

However, in a pure electrical vehicle, heating of the battery pack must be achieved in a short period of time by means of electrical power from the battery pack, resulting in a substantial reduction of the battery capacity and reduced driving range before a recharge is required. In addition, should a pure electrical vehicle be driven at a low temperature of the battery pack, then the ability of regenerative charging during braking is substantially reduced, and also, driving a vehicle with less motor power than normally anticipated, as a consequent of a cold battery pack, may be a danger to the traffic.

Accordingly, it is desirable to ensure that the battery pack is continuously heated when required, in order to avoid that the temperature of the battery pack drops below an optimal temperature range. In particular, it is desirable to provide heating such that the temperature of the battery pack is maintained within a desirable temperature range also when the battery is not in use, for example, during or after a recharge of a battery pack in a vehicle.

Temperature management of the battery in an electrical motor system is therefore an important aspect in order to provide an efficient battery system.

US 5 639 571 discloses a battery pack for uniform cooling and heating of the battery modules thereof, wherein a heating/ cooling air is circulated substantially uniformly between the individual battery modules so as to maintain the same temperature in the whole battery pack. However, given that ambient air is used as heating medium, the battery pack disclosed in US 5 639 571 is likely to have a reduced performance, as discussed above, at low outside temperatures.

### Summary of the invention

In view of the above-mentioned and other drawbacks of the prior art, a general object of the present invention is to overcome at least one of the above-mentioned problems, and to provide an improved battery pack, in particular, having means for both heating and cooling thereof.

According to a first aspect of the present invention these and other objects are achieved by a battery pack for a vehicle comprising a battery assembly comprising at least one battery cell, a housing enclosing the battery assembly, the housing comprising at least one baffle having openings for directing an air flow around the battery assembly, and a foil comprising a material with an electrical resistivity having a positive temperature coefficient (PTC) characteristic, the foil having openings, wherein the foil is arranged on at least a portion of the at least one baffle such that openings of the foil and openings of the portion are superposed, and wherein the foil is connectable to a power source, thereby enabling temperature control of the battery pack.

Heating elements consisting of materials having a PTC characteristic are known in prior art. However, most of such heating elements are based on electrical wires threaded through an electrically conductive body, consequently, such heating element is very sensitive as only a small physical damage, such as a hole, will interrupt the electric current and thus disable the heating function of the element. In contrast, WO 2008/048176, herby incorporated herein by reference, discloses a heating element having a layered structure comprising a PTC compound, wherein the heating element is constructed such that the electric current will pass through the PTC compound in the z-direction, perpendicular to the layered structure. Thus, the heating element disclosed in WO 2008/048176 is only locally affected by physical damage.

The invention is based on the realization that cooling and heating of a battery pack may be achieved by, on the one hand, at least one baffle having openings such that an air flow may be directed around the battery assembly and thus providing means for cooling, and on the other hand, a foil arranged on at least a portion of the at least one baffle, wherein the foil has openings overlaying the openings of the portion, and wherein the foil comprises a PTC material wherein the electric current is applied in the z-direction of the foil, thereby the foil may have openings, as the interruption of the current only occurs locally at the openings, and still providing means for heating.

By using a foil of a PTC material an efficient heating element may be achieved. One advantage with PTC materials is the self-regulating mechanism derived from the fact that the electrical resistivity of a PTC material increases with increased temperature, thus, given an applied current, a PTC material may be configured to start heating at or below a desirable temperature (trip temperature).

The battery pack according to the present invention may be particularly advantageous at low outside temperatures. During and after recharging of the battery cells of the battery assembly, the PTC foil may be connected to the battery assembly, and as a result, heat may be produced by the PTC foil as required, according to the above-discussed self-regulating mechanism, thus ensuring that the temperature of the battery pack does not fall below a desirable trip temperature. In this way, the temperature of the battery pack is efficiently controlled at a low cost and the above-discussed problems associated with a cold battery in a vehicle are avoided.

The term 'baffle' should, in the context of this application, be understood as a substantially planar inner wall which is being arranged in the housing such that a space is formed between the baffle and the housing wall, through which space an air flow may be directed.

According to one embodiment of the present invention, the at least one baffle may be a supporting element on which the battery assembly may be arranged. Thus, the battery assembly may be arranged in connection to a ventilated space. Given that the baffle has openings for further directing the air flow around the battery assembly, an efficient cooling of the battery assembly may be achieved.

In one embodiment according to the invention, the at least one baffle may be of a structurally strong and heat conductive material, such as, for example, a metallic material. Thereby, the at least one baffle may sustain the weight of the battery pack and an efficient heat distribution of the conductive heat from the PTC foil may be achieved.

According to one embodiment of the present invention, the baffle has a first side on which the battery assembly may be arranged, and a second side opposite to the first side, wherein the PTC foil may be arranged on the second side. Thereby, the PTC foil may be protected from the weight of the battery assembly and the PTC foil can heat the baffle from below so the heat from the PTC foil is distributed onto the battery assembly via the baffle.

According to one embodiment of the present invention, a dielectric and thermal conductive intermediate layer may be provided between the at least one baffle and the PTC foil. Thus, the at least one baffle and the PTC foil may be electrically isolated from each other and conductive heat transportation between the PTC foil and the at least one baffle may be enabled.

It should be noted that the above-discussed intermediate layer may comprise several layers of different material, for example, the intermediate layer may comprise a first layer with desirable dielectric properties and a second layer with desirable heat conductive properties.

In one embodiment of the present invention, an inner surface of the housing may comprise a heat reflective material, such as, for example, an aluminium foil or coating, thus heat radiation from the PTC foil may be internally reflected, and thereby, the heat may be contained within the housing.

According to one embodiment of the present invention, the battery pack may advantageously be connectable to an electrical motor or a hybrid motor. For example, the battery pack may be used to power a motor in a vehicle, and may be the sole source of energy in a vehicle.

According to a second aspect of the present invention, the above-mentioned and other objects are achieved through a method for manufacturing of a battery pack, comprising the steps of: providing a housing base; providing a foil comprising a material with an electrical resistivity having a positive temperature coefficient (PTC) characteristic, the foil having openings, and the foil is connectable to a power source; arranging the foil on at least a portion of a baffle having openings such that openings of the foil and openings of the portion are superposed; arranging the baffle on the housing base with the foil facing the housing base; mounting a battery assembly comprising at least one battery cell on top of the baffle; and providing a housing top on the housing base such that the baffle, the foil, and the battery assembly are substantially enclosed.

The method may further comprise the step of providing a dielectric and thermal conductive intermediate layer on the baffle or the PTC foil before arranging the PTC foil on the baffle such that the intermediate layer is disposed between the PTC foil and the baffle. Thus, electrically isolating the baffle from the foil whilst still enabling conductive heat transportation between the PTC foil and the baffle.

In one embodiment of the present invention, the intermediate layer is adhesive, thereby facilitating attachment of the PTC foil thereon. For example, the intermediate layer may be an adhesive tape. Thereby the intermediate layer may have two opposite adhesive surfaces, which facilitates the attachment of the tape to the baffle or PTC foil and the subsequent attachment of the PTC foil to the tape on the baffle or the baffle to the tape on the PTC foil.

Effects and features of this second aspect of the present invention are largely analogous to those described above in connection with the first aspect of the present invention.

### Brief description of the drawings

These and other aspects of the present invention will now be described in more detail, with reference to the appended drawings showing an exemplary embodiment of the invention, wherein:
Fig. 1 is a perspective view of one embodiment of the battery pack according to the present invention, additionally showing an enlarged cross-sectional view of an air flow through the openings;
Fig. 2 is a cross-sectional side view of a battery pack in Fig.1;
Fig. 3 is a cross-sectional front view of a battery pack in Fig.1;
Fig. 4a-e are perspective views each corresponding to a stage of the manufacturing process of the battery pack according to one embodiment of the present invention; and
Fig. 5 is a perspective view of a vehicle comprising the battery pack according to the present invention.

### Detailed description

In the following description, the present invention is described with reference to a battery pack having means for cooling and heating. Below, the invention is described with regard to its preferred embodiments which comprise the best mode presently known to the inventors, however, it should be understood that various changes and modifications as would be obvious to one having the ordinary skill in this art may be made without departing from the scope of the invention as set forth in the claims appended hereto.

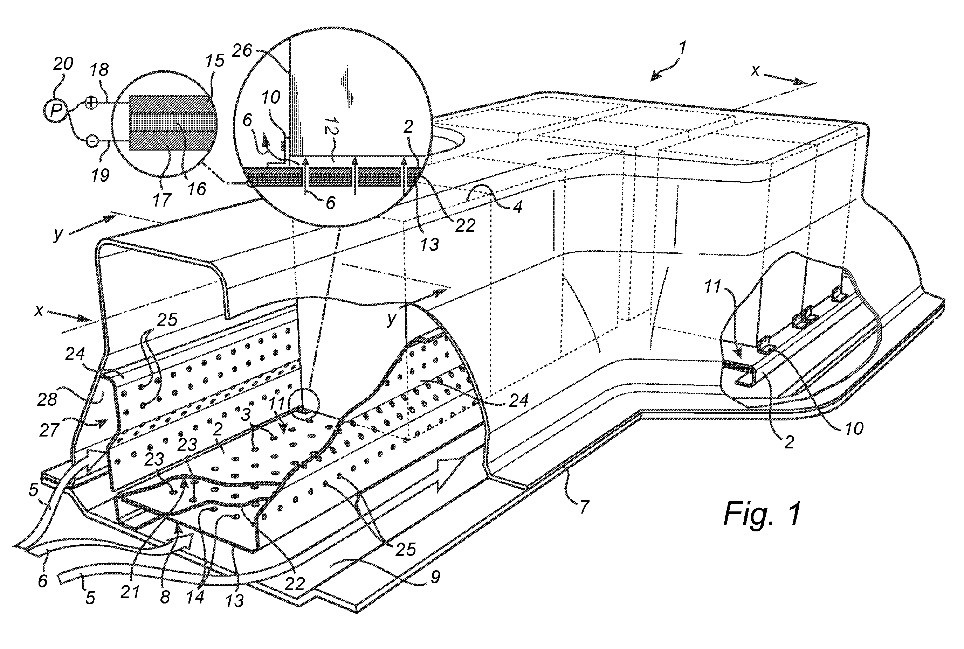

Fig. 1 is a perspective view of the battery pack 1 showing battery assemblies 4 arranged on a baffle 2 having openings 3. As shown in Fig. 1, the baffle 2 can have the form of a C-channel beam 2, thus, the baffle 2 can be arranged in a housing 7 such that a tunnel 8 between the baffle 2 and the housing base 9, along the longitudinal axis X-X, is created. An air flow 6 can be provided in the tunnel 8 and further be directed through the openings 3 of the baffle and around the battery assemblies 4, thereby achieving an efficient cooling of the battery assemblies 4. In order to avoid that the air flow 6 through the openings 3 of the baffle is blocked by the battery assemblies 4 arranged thereon, the battery assemblies 4 are attached to a plurality of L-beams 10 which are attached to top side 11 of the baffle, and as a result, a space 12 between the baffle 2 and the battery assemblies 4 is provided.

The openings 3 of the baffle, shown in Fig.1, are circle-shaped and given a thickness of the baffle of at least 1 mm, the diameter of the openings 3 can advantageously be at least 1 mm. However, the shape of the openings 3 of the baffle may be regular or irregular, for example, the openings may be in the form of circles, rectangles, squares, triangle, ellipses or circumferential rings. Moreover, the openings 3 may be distributed homogenously or irregularly over the baffle 2. The sum of the area of the openings 3 may constitute, for example, from 0.1 to 20% of the total area of the baffle, and preferably from 1 to 10% of the total area of the baffle.

A foil 13, shown in fig. 1, having openings 14 which have been designed to substantially match the same shape and size of the corresponding openings 3 of the baffle, can be arranged on the baffle 2 such that the openings 14 of the foil are aligned with the openings 3 of the baffle, enabling an air flow 6 through the superposed openings 14 of the foil and openings 3 of the baffle.

Further, the foil 13 comprises a material 16 with an electrical resistivity having a positive temperature coefficient (PTC) characteristic. As discussed above, it would be desirable to avoid temperatures of a battery pack below an optimal temperature interval, this can advantageously be achieved using a PTC material. A PTC material can be configured to have high enough resistance at a given temperature, such that little, if any, of an applied current can pass through the PTC material, but as the temperature drops below a given temperature, the resistance of the PTC material decreases and thereby the current through the PTC material increases and heat is produced. Thus, given an applied current, a PTC material can be configured to start heating at or below a desirable temperature (trip temperature). According to this mechanism, the PTC material can be self-regulated and consequently an efficient and a cost effective heating can be achieved as the heating is only provided when required.

According to one embodiment of the present invention, the PTC material 16 is configured to have a trip temperature in the range between +10°C and +25°C, consequently, heating through the PTC material may be ensured at at least temperatures below +10°C.

Advantageously, the foil 13 can have the same or similar multi-layered, zero- positive- zero temperature coefficient, ZPZ, foil structure, as disclosed in WO 2008/048176. The foil 13, shown in Fig.1, comprises a superimposed impedance polymeric (SIP) compound 16 which is sandwiched between a first 15 and a second 17 essentially planar metal foil, both having zero temperature coefficient, giving a multi-layered, zero- positive- zero (ZPZ) foil structure 13. As illustrated in Fig.1, the first essentially planar metal foil 15 is provided with a first electrode 18 and the second essentially planar metal foil 17 is provided with a second electrode 19, and the first 18 and second 19 electrodes are electrical connectable to a power source 20. Thereby, facilitating the electric connection between the PTC foil 13 and a power source 20, such as, for example, the battery assemblies 4.

One advantage of the ZPZ structure of the PTC foil 13 is that a voltage 20 can be applied in the vertical direction of the substantially planar PTC foil 13, i.e. substantially perpendicularly to the extent of the PTC foil 13 along the longitudinal axis X-X, as shown in Fig. 1. Thus, any physical damage, such an opening, causes a local interruption of the current at the site of the damage only. Accordingly, the PTC foil 13 having openings 14 according to the invention may advantageously be embodied by a ZPZ foil as described above, or by a different foil with similar structural and electrical properties.

Thus, means for both cooling and heating of a battery assembly are provided, as an air flow can be directed through the openings 3, 14 and around the battery assemblies 4 arranged thereon, and at low temperatures, heating of the same battery assemblies 4 according to the above-discussed self-regulating mechanism can be achieved through the PTC foil 13.

According to one embodiment of the invention, shown in Fig. 1, the PTC foil 13 is arranged on an underside 21 of the baffle, opposite to a top side 11, thus the baffle is heated by the PTC foil 13 from below. Also, by arranging the PTC foil 13 on the underside 21 rather than on the top side 11 I of the baffle, the weight of battery assembly arranged on the top side 11 will not be a load on the PTC foil 13 which could cause physical damage thereof.

As depicted in Fig.1, the PTC foil 13 arranged on an underside 21 of the baffle 2 is electrically separated from the baffle 2 by means of a dielectric and heat conductive intermediate layer 22 provided in between the baffle 2 and the PTC foil 13. The intermediate layer 22 has openings 23 which are aligned with the openings 3, 14 of the baffle and the foil, respectively. One advantage of such intermediate layer 22 is that an electric insulation can be provided between the PTC foil 13 and baffle 2 whilst still enabling heat conduction between the PTC foil 13 and the baffle 2.

The baffle 2 is preferably made of a structurally strong and highly heat conductive material, for example of a metallic material, such that the weight of a battery assembly can be sustained and heat can be efficiently distributed from a baffle 2.

As shown in Fig. 1, additional baffles 24 having openings 25 can be arranged in the housing 7, along the sides 26 of the battery assemblies 4, parallel to the longitudinal axis X-X. These side baffles 24 can function as an inner wall giving additional air tunnels 27 between the side baffle 24 and the inner side 28 of the housing, thus, by providing an air flow 5 in the air tunnels 27 and through the openings 25 of the side baffles 24, additional cooling can be achieved. Furthermore, the air tunnels 27 can be designed to provide cooling of certain particularly hot areas of the battery assemblies. Furthermore, it should be noted that in alternative embodiments, PTC foils (not shown) can also be arranged on these side baffles 24, in order to provide additional heating of the battery assemblies 4.

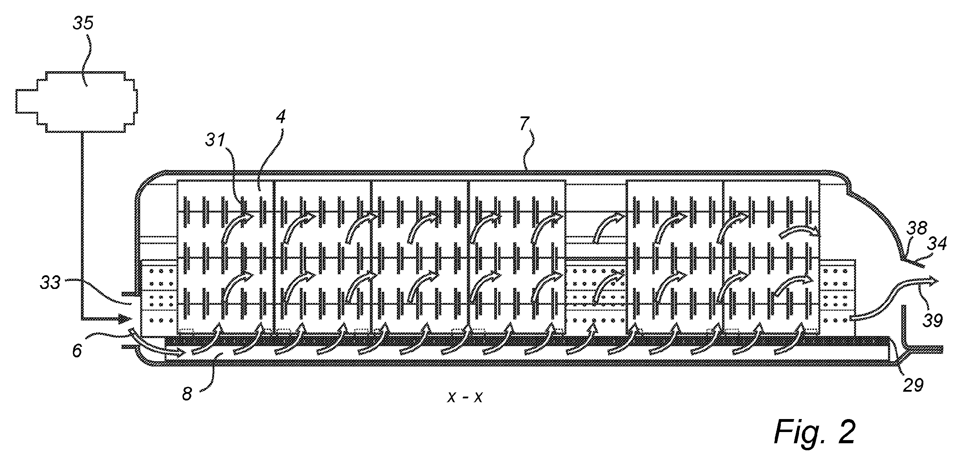

Fig. 2 is a cross-sectional side view along the longitudinal axis X-X of the battery pack 1 in Fig.1 showing a baffle arrangement 29 comprising a baffle having an intermediate layer and a PTC foil, as discussed above, arranged thereon. Battery assemblies 4 comprising battery cells 31, are arranged on the baffle arrangement 29 and enclosed in a housing 7. The housing 7 is advantageously of a structurally strong and insulating material, such as, for example, fibre glass reinforced plastics, thus the housing 7 can sustain external impacts as well as enabling temperature control of the battery pack. In addition, in order to further improve insulation of the housing 7, an inner side of the housing can comprise a heat reflective material, for example, an aluminium foil (not shown) or any other heat reflective coatings (not shown).

In the illustrated example in Fig. 2, the housing 7 comprises an air inlet 33 which is interconnected to a blower 35, providing an air flow 6 in the air tunnel 8 below the baffle arrangement 29. The air flow 6 is directed through the openings of the baffle arrangement and around the battery assemblies 4, thereby providing cooling thereof. The housing 7 comprises an air outlet 34 which can comprise a pressure relief air evacuation valve 38 and thus the release of an air flow 39 through the air outlet 34 can be controlled.

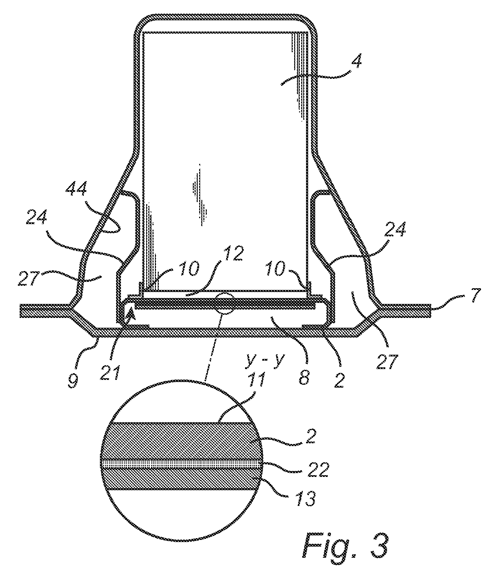

Fig. 3 is a cross-sectional side view along the transverse axis Y-Y of the battery pack in Fig.1. As shown in Fig. 3, the baffle 2 can be a C-tunnel beam arranged on the housing base 9 such that an air channel 8 below the baffle 2 is provided. It should be noted that in alternative embodiments, the baffle may be lacking the C-tunnel beam shape, and instead, the housing base may be designed such that when the baffle is arranged on the base, an air tunnel is provided under the baffle.

Additional air tunnels 27 can be provided in between the inner surface 44 of the housing and the side baffles 24. The battery assembly 4 can be arranged on the top 11 of the baffle via L-beams 10, giving a space 12 between the battery assembly 4 and the baffle 2. As discussed above, heating is provided by the PTC foil 13 which can be arranged from below on the intermediate layer 22 arranged on an underside 21 of the baffle.

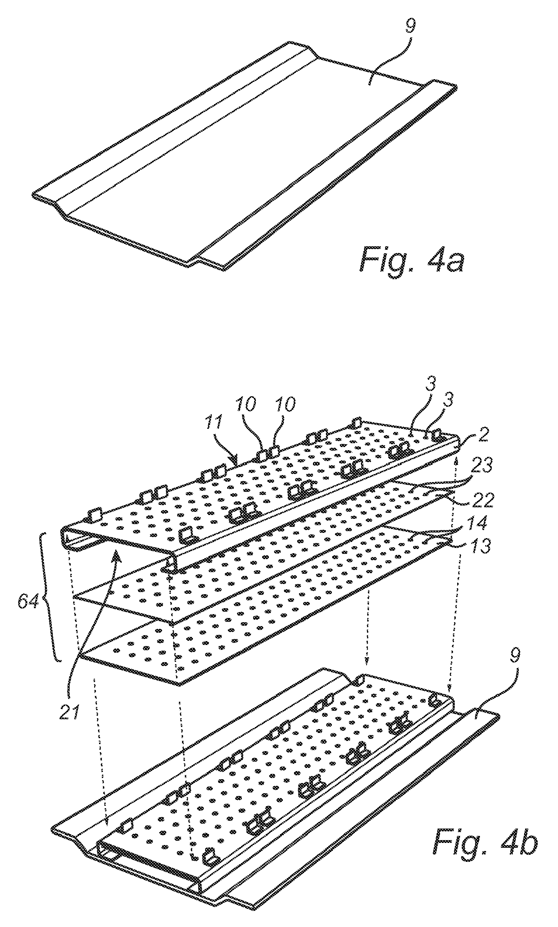

Fig. 4a-e schematically illustrates each step of the manufacturing process of the battery pack according to one embodiment of the present invention. According to a first step of the manufacturing a housing base 9 is provided (shown in Fig. 4a). In the next step, a C-tunnel shaped baffle 2 having openings 3 is provided, wherein the baffle 2 has a plurality of L-beams 10 arranged on the top 11 thereof, as shown in Fig. 4b, and a PTC foil 13 having openings 14 is arranged on the baffle 2 such that the openings 14, 3 of the PTC foil and the baffle, respectively, are superposed. Also, as shown in Fig. 4b, a dielectric and heat conductive intermediate layer 22 can advantageously be provided on an underside 21 of the baffle, or on the PTC foil 13, before arranging the PTC foil 13 on the baffle 2 such that the intermediate layer 22 is disposed between the baffle 2 and the PTC foil 13. The intermediate layer 22 should not cover the openings 3, 14, of the baffle and the PTC foil, respectively, and so in the embodiment showed in Fig. 4b, the intermediate layer 22 has openings 23 corresponding to the openings 3, 14 of the baffle and the PTC foil, respectively. However, the intermediate layer 22 may be a coating already present on the PTC foil 13 or on the underside 21 of the baffle. Furthermore, the intermediate layer 22 can advantageously be adhesive, thus facilitating the attachment of the PTC foil 13 to the intermediate layer 22 on the baffle 2. The intermediate layer 22 can, for example, be embodied as a dielectric and heat conductive adhesive tape having two opposite adhesive sides, wherein one side can be attached to the baffle 2 whilst the opposite side can be attached to the PCT foil 13.

Subsequently, the baffle arrangement 64 comprising the baffle 2, the intermediate layer 22 and the PTC foil 13 is arranged on the base 9 of the housing (see Fig. 4b).

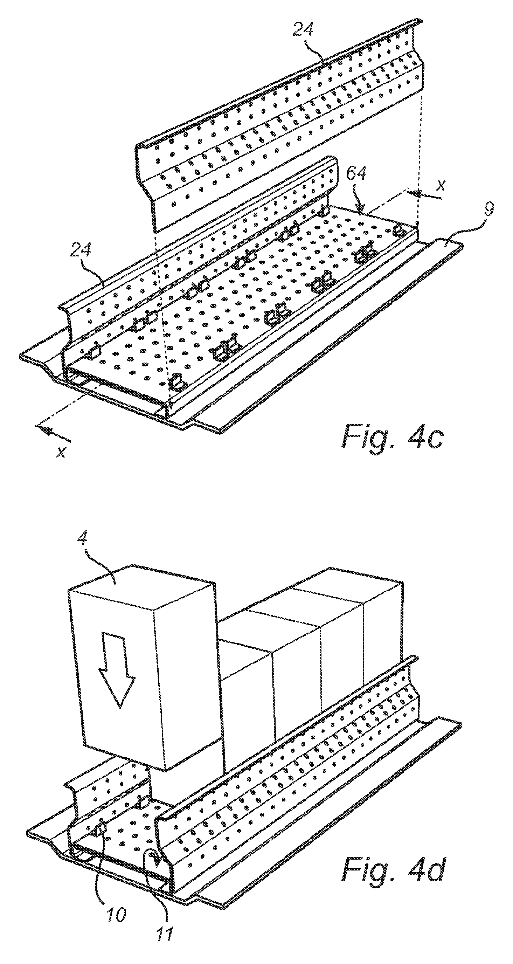

In the next step, shown in Fig.4c, side baffles 24 are provided along the longitudinal axis X-X of the baffle arrangement.

Next, battery assemblies 4 can be arranged on the L-beams 10 on the top 11 of the baffle (see Fig. 4d).

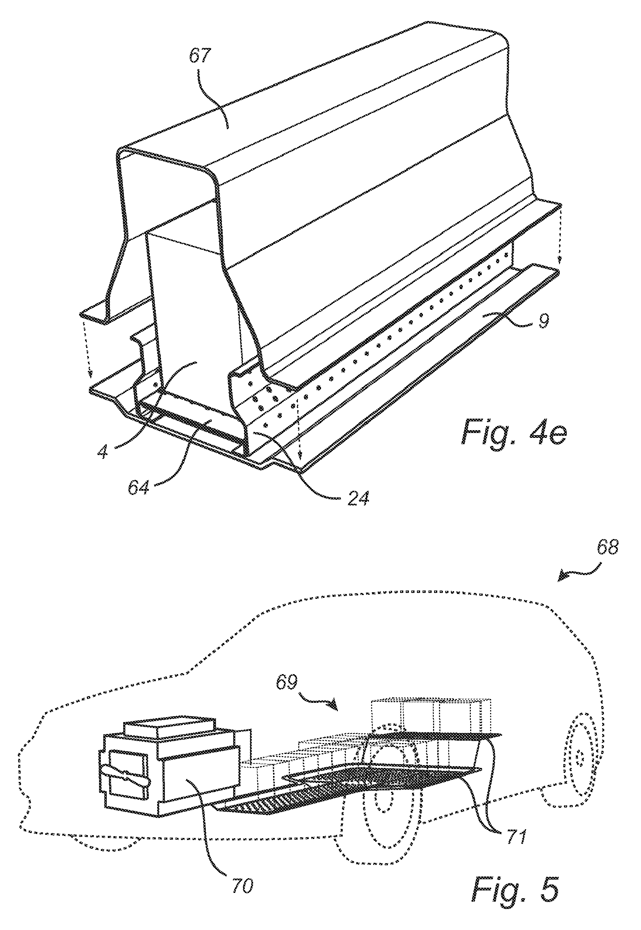

The last step, shown in Fig. 4e, involves providing a housing top 67 on the housing base 9 such that the baffle arrangement 64 and the battery assemblies 4 arranged thereon are substantially enclosed by the housing top 67 and housing base 9.

Fig. 5 is a perspective view of a vehicle 68 comprising the battery pack 69 according to the present invention. As illustrated in Fig.5, the battery pack 69 in a vehicle 68 can be connected to a motor 70. Furthermore, the shape and design of the battery pack 69 can be adapted to fit into an available space in a vehicle 68. Hence, as shown in Fig. 5, the battery pack 69 may, for example, comprise two different levels 71 at which baffles may be arranged.

The person skilled in the art realises that the present invention by no means is limited to the exemplary embodiments described above. For example, as indicated above, the shape and design of the battery pack may be adapted to be accommodated into a given space in a vehicle. The battery pack according to the invention may be used to provide electricity in other systems than a vehicle, such as any system with battery driven motors, for example, pumps and outdoor handheld machines, especially if there is a risk of exposing the battery to low temperatures.

## Claims

1. A battery pack (1; 69) for a vehicle comprising:
a battery assembly (4) comprising at least one battery cell (31)
a housing (7) enclosing said battery assembly, said housing comprising at least one baffle (2) having openings (3) for directing an air flow around said battery assembly, and
a foil (13) comprising a material (16) with an electrical resistivity having a positive temperature coefficient (PTC) characteristic, said foil having openings (14)
wherein said foil (13) is arranged on at least a portion of said at least one baffle (2) such that openings of said foil and openings of said portion are superposed, and wherein said foil is connectable to a power source (20), thereby enabling temperature control of said battery pack.

2. A battery pack (1; 69) according to claim 1, wherein said at least one baffle (2) is a supporting element on which said battery assembly (4) is arranged.

3. A battery pack (1; 69) according to any one of the preceding claims, wherein said at least one baffle (2) is of a structurally strong and heat conductive material.

4. A battery pack (1; 69) according to any one of the preceding claims, wherein said at least one baffle (2) having a first side (11) on which said battery assembly (4) is arranged, and a second side (21) opposite to said first side, wherein said foil (13) is arranged on said second side.

5. A battery pack (1; 69) according to any one of the preceding claims, wherein a dielectric and thermally conductive intermediate layer (22) is provided between said at least one baffle (2) and said foil (13).

6. A battery pack (1; 69) according to any one of the preceding claims, wherein said foil (13) comprises a multi-layered, zero- positive- zero temperature coefficient, ZPZ, foil structure.

7. A battery pack (1; 69) according to claim 6, wherein said ZPZ foil structure (13) comprises a positive temperature coefficient, PTC, superimposed impedance polymeric, SIP, compound (16) present between a first (15) and a second (17) essentially planar metal foil.

8. A battery pack (1; 69) according to claim 7, wherein said first essentially planar metal foil (15) is provided with a first electrode (18) and said second essentially planar metal foil (17) is provided with a second electrode (19), and said first and second electrodes are electrically connectable to said power source (20).

9. A battery pack (1; 69) according to any one of the preceding claims, wherein said power source (20) is said battery assembly (4).

10. A battery pack (1; 69) according to any one of the preceding claims, wherein an inner surface (44) of the housing comprises a heat reflective material.

11. A battery pack (1; 69) according to any one of the preceding claims, wherein said battery pack is connectable to an electrical motor or a hybrid motor.

12. A vehicle (68) comprising a motor (70) and said battery pack (69) according to any one of the preceding claims, wherein said battery pack (69) is connected to said motor.

13. Method for manufacturing of a battery pack (1; 69), comprising the steps of:
providing a housing base (9)
providing a foil (13) comprising a material (16) with an electrical resistivity having a positive temperature coefficient (PTC) characteristic, said foil having openings (14), and said foil is connectable to a power source (20)
arranging said foil (13) on at least a portion of a baffle (2) having openings (3) such that openings of said foil and openings of said portion are superposed
arranging said baffle (2) on said housing base (9) with said foil facing said housing base
mounting a battery assembly (4) comprising at least one battery cell (31) on top of said baffle (2)
providing a housing top (67) on said housing base (9) such that said baffle (2), said foil (13), and said battery assembly (4) are substantially enclosed.

14. A method according to claim 13, further comprising the step of providing a dielectric and thermal conductive intermediate layer (22) on said baffle (2) or said foil (13) before arranging said foil on said baffle such that said intermediate layer is disposed between said foil and said baffle.

15. A method according to claim 14, wherein said intermediate layer (22) is adhesive, thereby facilitating attachment of said foil (13) thereon.
